Europäisches Patentamt

(19) European Patent Office

Office européen des brevets

(11) Numéro de publication: **0 285 484**
**B1**

(12) **FASCICULE DE BREVET EUROPEEN**

(45) Date de publication du fascicule du brevet:
**28.11.90**

(51) Int. Cl.⁵: **F16K 31/143,** F16K 1/30,
F17C 13/04

(21) Numéro de dépôt: **88400611.5**

(22) Date de dépôt: **15.03.88**

(54) **Robinet pour bouteille de gaz sous pression.**

(30) Priorité: **17.03.87 FR 8703641**

(43) Date de publication de la demande:
**05.10.88 Bulletin 88/40**

(45) Mention de la délivrance du brevet:
**28.11.90 Bulletin 90/48**

(84) Etats contractants désignés:
**BE CH DE ES FR GB IT LI LU NL SE**

(56) Documents cités:
**DE-C- 858 537**
**GB-A- 757 779**
**GB-A- 861 665**
**US-A- 1 888 392**
**US-A- 3 587 634**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07(FR)**

(72) Inventeur: **Loiseau, Gérard, 4, rue Robespierre, F-78390 Bois D'Arcy(FR)**
Inventeur: **Molozay, Maurice, 1, allée des Charpentiers, F-78320 Le Mesnil Saint Denis(FR)**

(74) Mandataire: **Sadones Laurent, Renée et al, L'AIR LIQUIDE 75, quai d'Orsay, F-75321 Paris Cédex 07(FR)**

## Description

La présente invention concerne un robinet pour bouteille de gaz sous pression, du genre comportant un corps destiné à être fixé sur une tête de bouteille avec un passage d'ecoulement de gaz équipé d'un clapet a tige coulissant au travers d'un soufflet d'étanchéité et qui est solidaire d'une tige de piston de commande pneumatique d'ouverture de clapet avec un ressort antagoniste de rappel en position de fermeture dudit clapet, comportant des moyens manuels de deplacement axial du piston avec verrouillage en position de fermeture du clapet d'une part, et des moyens manœuvrables d'ouverture de clapet en l'absence de pression gazeuse sur ledit piston, selon lequel les dits moyens de verrouillage en position de fermeture du clapet comprennent une butée d'une piece-chapeau à position axiale manœuvrable à vissage.

Le brevet US-A 3 587 634 décrit un robinet de ce type où la piéce en forme de chapeau est vissée sur la tige de piston elle-même et présente un rebord qui coulisse dans une chambre formant ainsi butée d'ouverture maximale réglable pour le clapet et la piece en forme de chapeau peut être vissée à fond interdisant ainsi toute ouverture du clapet en presence d'une pression gazeuse. Au contraire, même lors d'une abscence de pression gazeuse, on peut procéder à l'ouverture manuelle par dévissage de la pièce chapeau.

La présente invention vise une réalisation assurant ces deux mêmes fonctions par des moyens permettant une sécurité absolue, en ce sens que l'opération d'ouverture du robinet, en l'absence de pression gazeuse, ne peut être assurée que par du personnel qualifié et autorisé. Cet objectif de l'invention est atteint en ce que ladite pièce en forme de chapeau est manœuvrable à vis dans une partie du corps de robinet et présente une perforation axiale pour le passage d'un prolongateur de tige de piston, avec butée externe, vissée en position réglable en bout de la tige de piston et contre laquelle peut prendre appui la pièce-chapeau conformée extérieurement en bouton de manœuvre. De la sorte, en cas de non fonctionnement du robinet, on insere le prolongateur à butée – conservé en lieu sûr – au travers du bouton de manœuvre, en le vissant dans l'extréimité de tige de piston, puis en dévissant le volant de manœuvre contre la butée de prolongateur, assurant ainsi une extraction partielle de l'ensemble piston-clapet vers une position d'ouverture. L'originalité essentielle de l'invention est donc de séparer physiquement le moyen de réglage de la course de piston, donc d'ouverture de clapet, du moyen de secours – utilisable de façon exceptionnelle – place en lieu sûr, que constitue ce prolongateur a butée.

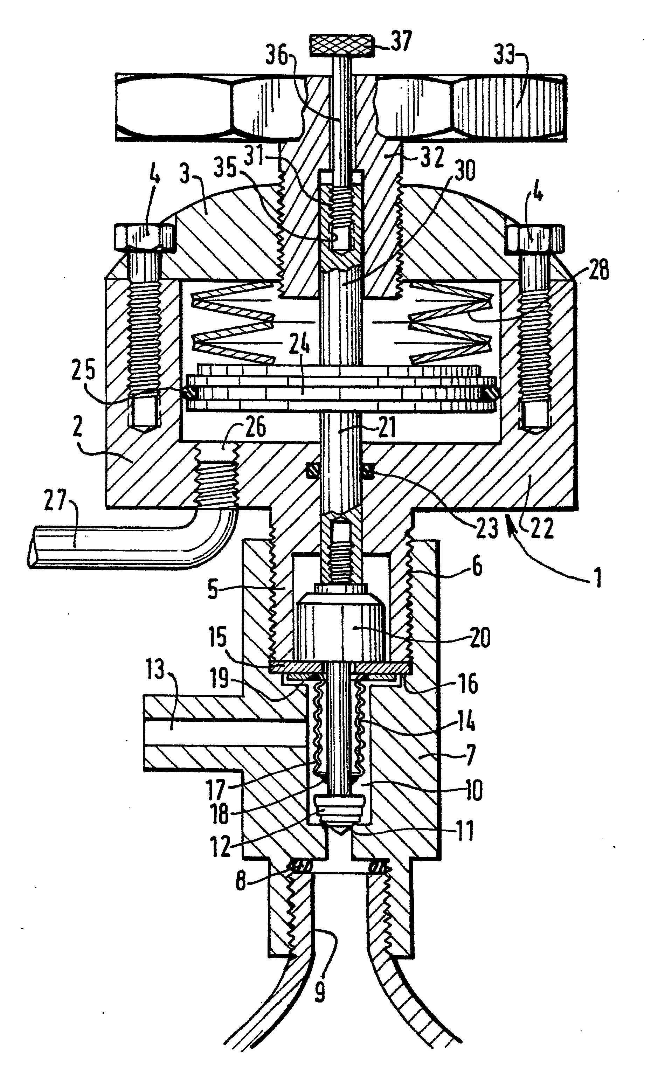

Les caractéristiques et avantages de l'invention ressortiront d'ailleurs de la description qui suit, a titre d'exemple, en référence au dessin annexé qui est une coupe d'un robinet selon l'invention.

Le robinet comporte un corps de commande 1 en formé d'une enbase 2 surmontée d'un couvercle 3 ferme par vis 4. L'embase 2 présente un embout fileté 5 vissé dans un dégagement 6 d'un corps de robinet 7 visse a joint d'étanchéite 8 sur une tête de bouteille 9.

Le corps du robinet 7 présente un passage axial 10 resserré en un siège 11 pour un clapet 12, communiquant avec un passage transversal de soutirage 13.

Le clapet 12 est solidaire d'une tige de clapet 14 traversant librement une plaque de fermeture 15 serrée a étanchéité contre un épaulement 16 du corps de robinet 7 par l'extrémité de l'embout 5. Un soufflet d'étanchéité 17 est soudé en 18 sur la tige de clapet 14 et en 19 sur la plaque d'étanchéité 15.

La tige 14 porte une butée 20 d'appui sur la plaque 15 en position de fermeture du clapet 12 et se prolonge en 21 au travers du fond 22 à joint 23 de l'embase 2 et porte un corps de piston 24 coulissant à joint d'étanchéité 25 dans une chambre cylindrique formée par l'embase 2 et le couvercle 3. Le piston 24 est déplacé à ouverture de clapet par un gaz comprimé introduit par un orifice 26 de fond d'embase 22 et véhiculé par une conduite 27, contre l'action d'un ressort antagoniste de compression 28.

La tige de piston 14 présente une extension 30 coulissant librement dans un évidement cylindrique axial 31 d'une partie filetée extérieurement 32 volant de manœuvre 33, qui est vissée dans le couvercle 3.

L'extension de tige 30 présente elle-même un évidement taraudé 35 dans lequel se visse une tige 36 à molette - butée 37 faisant saillie à l'extérieur au travers d'une perforation 38 du volant 33. En général, la pièce de butée 37 n'est pas montée sur le robinet. Elle est conservée soigneusement à l'écart et n'est utilisée de façon occasionnelle qu'en cas de difficulté.

En fonctionnement normal, le volant 33 est vissé de façon à assurer, entre extrémité de tige 30 et fond d'évidement 31, un jeu légèrement supérieur à la course d'ouverture du clapet 12, lorsque la pression est admise en 26-27.

La position de fermeture de sécurité est assurée manuellement par vissage du volant 33 jusqu'à ce que le fond de l'évidement 31 vienne en butée contre l'extrémité libre de l'extension de tige 30, alors que piston 24 et clapet 12 sont en position de fermeture. Dans cette position, l'application de la pression par la conduite 27 est inopérante pour déplacement de piston 24, donc pour ouvrir le clapet 12.

En cas de besoin provoqué par une difficulté opératoire, on peut dégager le clapet 12 de son siège 11 et donc assurer le passage du gaz, même sans application de gaz comprimé dans la conduite 27 en dévissant le volant 33 jusqu'à ce qu'il vienne en butée contre la molette 37, et en poursuivant le mouvement de devissage, ce qui a pour effet d'assurer un déplacement de l'ensemble tige 36, tige 30, piston 24 contre l'action du ressort 28, donc de dégager le clapet 12 de son siège 11.

Le robinet décrit est particulièrement adapté au transfert de gaz présentant des degrés de toxicité.

## Revendications

Robinet pour bouteille de gaz sous pression, du genre comportant un corps destiné à être fixé sur une tête de bouteille (9) avec un passage d'écoulement de gaz (10–13) équipé d'un clapet (12) à tige (14) coulissant au travers d'un soufflet d'étanchéité (17) et qui est solidaire d'une tige (21) de piston (24) de commande pneumatique d'ouverture de clapet avec un ressort antagoniste de rappel (28) en position de fermeture dudit clapet (12), comportant des moyens manuels (31–32–33) de réglage de la course au piston (24) avec verrouillage éventuel en position de fermeture du clapet (12) d'une part, et des moyens manœuvrables d'ouverture de clapet en l'absence de pression gazeuse sur ledit piston (24), selon lequel les dits moyens de verrouillage (32) en position de fermeture du clapet (12) comprennent une butée d'une pièce-chapeau (32) à position axiale manœuvrable à vissage, caractérisé en ce que ladite pièce en forme de chapeau (32) est manœuvrable à vis dans une partie (3) du corps de robinet et présente une perforation axiale pour le passage d'un prolongateur (36) de tige de piston (30), avec butée externe (37), vissée en position réglable en bout de la tige de piston (30) et contre laquelle peut prendre appui, en position de dévissage, la pièce-chapeau (32) conformée extérieurement en bouton de manœuvre (33).

## Patentansprüche

Ventil für eine Druckgasflasche, mit einem Element, welches dazu bestimmt ist, am oberen Ende der Flasche (9) befestigt zu werden, mit einem Fließdurchgang für Gas (10-13), der mit einer Klappe (12) mit einer Stange (14) ausgestattet ist, welche durch einen Dichtungsbalg (17) gleitet und die mit einer Stange (21) des Kolbens (24) formschlüssig verbunden ist für die pneumatische Steuerung der Öffnung der Klappe mit einer gegenwirkenden Rückholfeder (28) in Schließposition der Klappe (12), mit Handsteuermitteln (31-32-33) für den Kolbengang (24) mit eventuellem Verriegeln in Schließposition der Klappe (12) eines Teils, und mit Steuermitteln für das Öffnen der Klappe bei Abwesenheit von Gasdruck auf den Kolben (24), nach welchem die Verriegelungsmittel (32) in Schließposition der Klappe (12) einen Anschlag eines in axialer Position mit Verschraubung steuerbaren Abdeckungsstückes (32) aufweisen, dadurch gekennzeichnet, daß das Stück in Form der Abdeckung (32) in einem Teil (3) des Ventilkörpers durch Schrauben steuerbar ist und eine axiale Perforation aufweist für den Durchgang eines Verlängerungsstückes (36) der Kolbenstange (30) mit äußerem Anschlag (37), der am Ende der Kolbenstange (30) in steuerbarer Position verschraubt ist und gegen welchen sich in Aufschraubposition das Abdeckungsstück (32), außen im Steuerknopf (33) angepaßt, abstützen kann.

## Claims

Valve for pressurized gas container of the type having a body intended to be fixed to a head of a container (9) with a gas discharge passage (10-13) equipped with a valve (12) with a spindle (14) sliding through a sealing bellows (17) and which is integral with a rod (21) of a piston (24) for pneumatically controlling the opening of the valve with a counteracting spring (28) for restoring the said valve (12) to the closed position, comprising manual means (31-32-33) for adjusting the stroke of the piston (24) with possible locking of the valve (12) in the closed position, and also operable means for opening the valve in the absence of gas pressure on the said piston (24), in which the said means (32) for locking the valve (12) in the closed position comprise a stop of a bonnet piece (32) with a manoeuvrable axial position by screwing, characterized in that the said bonnet-shaped piece (32) is manoeuvrable by screwing in a part (3) of the body of the valve and has an axial perforation for a piston rod extender (36), with an external stop (37), screwed into an adjustable position in the end of the piston rod (30) and against which the bonnet piece (32), externally shaped as a control knob (33), bears in the unscrewed position.